(19) Europäisches Patentamt
European Patent Office
Office européen des brevets

(11) Veröffentlichungsnummer: **0 564 475 B1**

(12) # EUROPÄISCHE PATENTSCHRIFT

(45) Veröffentlichungstag der Patentschrift: **22.02.95**

(51) Int. Cl.[6]: **B01D 19/04**

(21) Anmeldenummer: **92900153.5**

(22) Anmeldetag: **06.12.91**

(86) Internationale Anmeldenummer:
**PCT/EP91/02341**

(87) Internationale Veröffentlichungsnummer:
**WO 92/11073 (09.07.92 92/17)**

(54) **VERWENDUNG VON SPEZIELLEN KOHLENSÄUREESTERN ALS SCHAUMBEKÄMPFUNGSMITTEL.**

(30) Priorität: **24.12.90 DE 4041754**

(43) Veröffentlichungstag der Anmeldung:
**13.10.93 Patentblatt 93/41**

(45) Bekanntmachung des Hinweises auf die Patenterteilung:
**22.02.95 Patentblatt 95/08**

(84) Benannte Vertragsstaaten:
**AT BE CH DE DK ES FR GB IT LI NL SE**

(56) Entgegenhaltungen:
**FR-A- 1 447 238**
**US-A- 3 332 980**

(73) Patentinhaber: **Henkel Kommanditgesellschaft auf Aktien**

**D-40191 Düsseldorf (DE)**

(72) Erfinder: **MAHLER, Ulrike**
**Gnesener Strasse 8**
**D-4000 Düsseldorf 13 (DE)**
Erfinder: **WESTFECHTEL, Alfred**
**Rotdornweg 7**
**D-4010 Hilden (DE)**
Erfinder: **SLADEK, Hans-Jürgen**
**Hintere Sollbrüggenstrasse 2**
**D-4150 Krefeld (DE)**
Erfinder: **KIELMANN, Sylke**
**Beckhauer Strasse 31**
**D-4600 Erkrath 2 (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.09/3.3.3)

## Beschreibung

Die Erfindung betrifft die Verwendung von speziellen Kohlensäureestern als Schaumbekämpfungsmittel bei der Verarbeitung und/oder Herstellung von Nahrungsmitteln sowie bei Fermentationsprozessen.

Schaumstörungen können vor der Entstehung von Schaum durch Zusatz von Schauminhibitoren verhindert oder entstandener Schaum durch Hinzufügen von Entschäumern zerstört werden. Sowohl Schauminhibitoren als auch Entschäumer sind in diesem Sinne Schaumbekämpfungsmittel.

Bei der industriellen Bearbeitung und/oder Herstellung von Nahrungsmitteln kommt der Bekämpfung und Verhütung von auftretendem Schaum beträchtliche Bedeutung zu. So können beispielsweise bei der industriellen Verarbeitung zuckerhaltiger Pflanzensäfte, wie sie in großem Maßstab bei der Gewinnung von Zuckerrüben erfolgt, besondere Schwierigkeiten durch übermäßige Schaumentwicklung in den Diffuseuren, in den Klärvorrichtungen sowie in den Carbonisiertanks und in den Verdampfern auftreten. Ebenso gilt es bei der Herstellung von Kartoffelfertigprodukten wie Chips oder Pommes Frites, bei der Erzeugung von Backhefe unter Verwendung von Melasse oder anderen technischen Fermentationsprozessen wie der Gewinnung von Arzneimitteln, die Schaumbildung auf ein das technische Produktionsverfahren nicht beeinträchtigendes Maß herabzusetzen.

Die zur Schaumregulierung einzusetzenden Hilfsmittel in der Zukkerindustrie könnten spurenweise ins fertige Nahrungsmittel Zucker gelangen, so daß selbstverständlich physiologisch völlig unbedenkliche Schaumbekämpfungsmittel gefordert sind. Schaumbekämpfungsmittel, die im Außenbetrieb bei der Rübenschwemme ins Abwasser gelangen, sollen weiterhin biologisch gut abbaubar sein. Des weiteren sollten die potentiellen Restmengen der Schaumbekämpfungsmittel, die bei der Zuckerrübenverarbeitung in die Melasse gelangen, die Hefefabrikation nicht nachteilig beeinflussen, da die so erhaltene Melasse als Nahrung für die technische Herstellung von Backhefe verwendet wird. Für den Einsatz in der kartoffelverarbeitenden Industrie müssen die Schaumbekämpfungsmittel zumindest in der Lage sein, den schwer zu bekämpfenden Stärkeschaum zu regulieren. Für den praktischen Einsatz schaumdämpfender Mittel insgesamt wird erwartet, daß in kleinen Anwendungsmengen hohe Spontanwirkung und gute Langzeitwirkung erreicht wird.

Für die Entschäumung in der Zucker- und Hefeindustrie sind seit langem Fette und Öle wie Rüb-, Erdnuß-, Olivenöl sowie Wollfett im Gebrauch. Auch Fettsäuremonoglyceride, Fettsäurepolyglykolester, Polyalkylenglykole, Ethylenoxidaddukte an Alkylphosphorsäuren und an verzweigten Alkoholen, Alkylenoxidaddukte an Oligosaccharide sowie freie Fettalkohole sind für diesen Zweck vorgeschlagen worden. Typische Schaumbekämpfungsmittel mit Patentzitaten und Anwendungsbereichen werden in Ullmans Enzyklopädie der technischen Chemie, Band A 11 (5. Auflage) 1988, Seiten 465 bis 490 aufgeführt.

In DE-B-12 42 569 wird vorgeschlagen, Kohlensäureester, deren Alkylreste gegebenenfalls durch ein Sauerstoffatom unterbrochen sein können, als schaumdämpfendes Mittel für schäumende Wasch- und Reinigungsmittelsysteme mit anionaktiven, kationaktiven oder nichtionischen Verbindungen zu verwenden. Als ein mögliches Anwendungsgebiet wird das maschinelle Spülen und Desinfizieren von Flaschen und Kannen in der Nahrungsmittelindustrie genannt. Obgleich die dort genannten Dialkylcarbonate für diesen Anwendungsbereich gute entschäumende Wirkung zeigen, kann daraus nicht abgeleitet werden, daß sie für andere Einsatzzwecke wie zum Beispiel für die Zucker-, Kartoffelindustrie und bei Fermentationsprozessen und deren speziellen Anforderungen geeignet sind. So verursachen zum Beispiel in der Zuckerindustrie ganz andere Substanzen wie Saponine die Schaumbildung und beeinflussen daher auch die Schaumkonstitution. Zudem unterscheiden sich Reinigungsvorgänge von Flaschen erheblich in ihrer Mechanik, vor allem auch im Lufteintrag, der wiederum Art und Umfang des gebildeten Schaumes beeinträchtigt.

Aus der US-A-3 332 980 sind alkoxylierte Kohlensäureester bekannt, deren Alkylreste einen Alkoxylierungsgrad im Bereich von 1 bis 150 aufweisen und die in weiten Bereichen verwendet werden können. Eins der vielen möglichen Einsatzgebiete dieser Substanzen ist auch die Entschäumung im weitesten Sinn, jedoch ohne Angabe, welche der alkoxylierten Kohlensäureester in welchen Mengen für welche Art der Entschäumung verwendet werden kann. Wie dargelegt unterscheiden sich Schäume jedoch oft erheblich, so daß für den Fachmann weiterhin ein Bedarf an speziellen Verbindungen bestand, die die bereits oben genannten Anforderungen an ein Schaumbekämpfungsmittel für die Zuckerindustrie, kartoffelverarbeitende Industrie und/oder bei Fermentationsprozessen erfüllen.

Aufgabe der vorliegenden Erfindung ist es daher, neue spezielle Schaumbekämpfungsmittel bereitzustellen, die in geringen Einsatzmengen sehr gute Spontan- und Langzeitwirkung zeigen und zudem die Anforderungen für ihre Anwendung in Zuckerindustrie, Kartoffelindustrie sowie bei Fermentationsprozessen erfüllen.

Gegenstand der vorliegenden Erfindung ist die Verwendung von Kohlensäureestern der allgemeinen Formel I

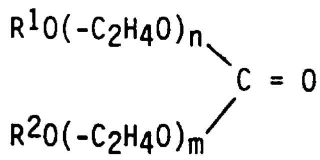

(I)

in der $R^1$ ein Alkylrest, abgeleitet von einem aliphatischen, gesättigten primären Alkohol mit 1 bis 22 Kohlenstoffatomen und $R^2$ ein Alkylrest, abgeleitet von einem aliphatischen, gesättigten primären Alkohol mit 1 bis 8 Kohlenstoffatomen und/oder $R^1$ und n eine Zahl von 2 bis 20 und m 0 oder n bedeuten, als Schaumbekämpfungsmittel für die Zuckerrüben- oder kartoffelverarbeitende Nahrungsmittelindustrie und/oder bei Fermentationsprozessen.

Die erfindungsgemäß verwendeten Kohlensäureester sind an sich bekannte Verbindungen und lassen sich nach den im Houben Weyl, "Methoden der organischen Chemie", 4. Auflage, Band E4, Seite 66 ff. genannten Verfahren herstellen. Einen Zugang bietet die Umsetzung von Phosgen mit aliphatischen Alkoholen, die zu symmetrischen Kohlensäureestern führt, vgl. J. Chem. Soc. 117, 708 (1920). Eine weitere Möglichkeit bietet die Umsetzung von Chlorameisensäureestern mit Alkoholen, wobei je nach Art der Reaktionspartner symmetrische oder unsymmetrische Kohlensäureester aufgebaut werden können, vgl. J. Prakt. Chem. 22, 353 (1880). Den einfachsten Synthesezugang bietet die Umesterung von Kohlensäurealkylestern mit Alkoholen in Gegenwart basischer Katalysatoren wie Natriummethanolat oder Alkalimetallhydroxid unter Eliminierung der leichter flüchtigen Alkoholkomponente. Nach dem letztgenannten Verfahren lassen sich je nach Einsatzmenge der für die Umesterung gewünschten Alkohole symmetrische und/oder unsymmetrische Kohlensäureester herstellen.

Im Rahmen der Erfindung werden die Kohlensäureester der allgemeinen Formel I bevorzugt durch Umesterung von Dialkylcarbonaten mittels Anlagerungsprodukte von Ethylenoxid an aliphatische, gesättigte primäre Alkohole mit 1 bis 22 C-Atomen hergestellt. Die zur Umesterung geeigneten Dialkylcarbonate weisen zwei identische aliphatische, gesättigte Alkylreste mit 1 bis 8 C-Atomen auf, die verzweigt oder unverzweigt sein können. Insbesondere geeignete Dialkylcarbonate sind Dimethyl-, Diethyl-, Di-n-propyl-Diisopropyl-, Di-n-butyl-, Diisobutyl-, Di-n-octyl- oder Di-2-ethylhexylcarbonat.

Zur Herstellung der Kohlensäureester der allgemeinen Formel I werden die genannten Dialkylcarbonate mit Anlagerungsprodukten von 2 bis 20 Mol Ethylenoxid an aliphatische, gesättigte, primäre Alkohole mit 1 bis 22 C-Atomen partiell oder zumindest nahezu vollständig umgeestert. Bevorzugt werden Anlagerungsprodukte von 2 bis 20 Mol Ethylenoxid an aliphatische, gesättigte, primäre, unverzweigte Alkohole mit 1 bis 22 C-Atomen. Geeignete Vertreter dieser ethoxylierten Alkohole sind Anlagerungsprodukte von 2 bis 20 Mol Ethylenoxid an Methanol, Ethanol, Propanol, Butanol, Pentanol, Hexanol, Octanol, Nonanol, Decanol, Dodecanol, Tetradecanol, Hexadecanol, Octadecanol, Eicosanol und Docosanol. Ganz besonders bevorzugt von diesen werden Anlagerungsprodukte von Ethylenoxid an aliphatische, gesättigte, primäre, unverzweigte Alkohole mit 6 bis 20 und insbesondere mit 8 bis 18 C-Atomen, die sogenannten gesättigten Fettalkohole. Dabei können die gesättigten Fettalkohole mit 8 bis 18 C-Atomen, wie in der Fettchemie üblich, in Form ihrer an diesen Fettalkoholen reichen technischen Gemischen wie sie bei der Natriumreduktion oder der katalytischen Hydrierung von Fettsäuregemischen aus der hydrolytischen Spaltung von nativen Fetten oder Ölen erhalten werden, gemeint sein. Die Herstellung der Anlagerungsprodukte von Ethylenoxid an die genannten Alkohole erfolgt nach bekannten Verfahren bei erhöhter Temperatur und erhöhtem Druck in Gegenwart von geeigneten Ethoxylierungskatalysatoren wie Alkalimetallalkoholat oder Hydrotalcit. Dabei werden je nach gewünschtem Ethylierungsgrad n bzw. m 2 bis 20 Mol Ethylenoxid pro Mol Alkohol umgesetzt. Zur Herstellung der Kohlensäureester der allgemeinen Formel I über die Umesterung der Dialkylcarbonate werden insbesondere die folgenden Anlagerungsprodukte von Ethylenoxid an Alkohole bevorzugt: Octanol mit 4 Mol Ethylenoxid, Octanol mit 8 Mol Ethylenoxid, Dodecanol mit 2 Mol Ethylenoxid, Dodecanol mit 6 Mol Ethylenoxid, Dodecanol mit 7 Mol Ethylenoxid, Tetradecanol mit 2 Mol Ethylenoxid, Tetradecanol mit 6 Mol Ethylenoxid, Tetradecanol mit 7 Mol Ethylenoxid, Hexadecanol mit 2 Mol Ethylenoxid, Hexadecanol mit 7 Mol Ethylenoxid, Octadecanol mit 2 Mol Ethylenoxid, Octadecanol mit 7 Mol Ethylenoxid und/oder deren technischen Gemische.

Wie bereits erwähnt, kann die Umesterung der Dialkylcarbonate mittels der Anlagerungsprodukte von Ethylenoxid an die genannten aliphatischen, gesättigten, primären Alkohole mit 1 bis 22 C-Atomen partiell oder vollständig erfolgen. Durch vollständige bzw. zumindest nahezu vollständige Umesterung werden sogenannte symmetrische Kohlensäureester erhalten. Einer Ausführungsform der vorliegenden Erfindung entsprechend werden derartige symmetrische Kohlensäureester der allgemeinen Formel I verwendet, in der

der Rest $R^2$ die gleiche Bedeutung hat wie der Alkylrest $R^1$ und $R^1$ abgeleitet ist von einem der oben beschriebenen Anlagerungsprodukte von Ethylenoxid an aliphatische, gesättigte, primäre Alkohole mit 1 bis 22 C-Atomen und dementsprechend die den Ethoxylierungsgrad bezeichnenden Indices n und m die gleiche Zahl bedeuten. Ganz besonders bevorzugt werden symmetrische Kohlensäureester der allgemeinen Formel I, in der $R^1$ und $R^2$ jeweils den gleichen Alkylrest, abgeleitet von einem aliphatischen, gesättigten, primären Alkohol mit 6 bis 20 C-Atomen, vorzugsweise von unverzweigten Alkoholen mit 8 bis 18 C-Atomen und n und m jeweils die gleiche Zahl von 2 bis 20, vorzugsweise 2 bis 16 und insbesondere 2 bis 12 bedeuten. Insbesondere geeignet sind symmetrische Kohlensäureester der folgenden Formeln

$[C_8H_{17}O(C_2H_4O)_4]_2CO$
$[C_8H_{17}O(C_2H_4O)_8]_2CO$
$[C_{12}H_{25}O(C_2H_4O)_2]_2CO$
$[C_{12}H_{25}O(C_2H_4O)_6]_2CO$
$[C_{12}H_{25}O(C_2H_4O)_7]_2CO$
$[C_{14}H_{29}O(C_2H_4O)_2]_2CO$
$[C_{14}H_{29}O(C_2H_4O)_6]_2CO$
$[C_{16}H_{33}O(C_2H_4O)_2]_2CO$
$[C_{16}H_{33}O(C_2H_4O)_6]_2CO$
$[C_{18}H_{37}O(C_2H_4O)_2]_2CO$
$[C_{18}H_{37}O(C_2H_4O)_6]_2CO$

und/oder technische Gemische hiervon.

Die Herstellung derartiger erfindungsgemäß verwendeter symmetrischer Kohlensäureester über die Umesterung erfordert mindestens 0,5 Mol der genannten Dialkylcarbonate auf 1 Mol der genannten Anlagerungsprodukte von Ethylenoxid an die genannten Alkohole. Vorzugsweise werden die Dialkylcarbonate in Molmengen von 0,55 Mol bis 1 Mol auf 1 Mol Anlagerungsprodukte von Ethylenoxid an die genannten Alkohole eingesetzt. Des weiteren ist es von Vorteil, die Umesterung in Anwesenheit von basischen Katalysatoren, vorzugsweise Natriummethanolat, durchzuführen und den aus den Dialkylestern freigesetzten Alkohol destillativ zu entfernen. Da Umesterungen jedoch Gleichgewichtsreaktionen sind, können die symmetrischen Kohlensäureester als Nebenprodukte sowohl unumgesetzte Anlagerungsprodukte von Ethylenoxid an den genannten Alkoholen als auch nur partiell umgeesterte Kohlensäureester enthalten. Falls gewünscht, können die unumgesetzten ethoxylierten Alkohole durch Phosphogenierung entfernt werden.

Nach einer weiteren Ausführungsform der vorliegenden Erfindung können Kohlensäureester der allgemeinen Formel I verwendet werden, in der der Rest $R^2$ einen gesättigten, aliphatischen Alkylrest mit 1 bis 8 C-Atomen bedeutet und gleich oder verschieden ist von dem Alkylrest $R^1$, der wiederum abgeleitet ist von einem der bereits genannten aliphatischen, gesättigten, primären Alkohole mit 1 bis 22 C-Atomen. Auf jeden Fall unterscheiden sich nach dieser Ausführungsform die Indices m und n insofern, als m die Zahl 0 bedeutet und n eine den Ethoxylierungsgrad angebende Zahl zwischen 2 und 20. Ganz besonders bevorzugt von diesen unsymmetrischen Kohlensäureestern der allgemeinen Formel I werden solche, in der $R^2$ eine Methyl- oder Ethylgruppe, $R^1$ einen Alkylrest, abgeleitet von einem aliphatischen, gesättigten, primären Alkohol mit 6 bis 20, vorzugsweise von einem unverzweigten Alkohol mit 8 bis 18 und n eine Zahl von 2 bis 16, vorzugsweise 2 bis 12 und m = 0 bedeuten. Insbesondere geeignet sind unsymmetrische Kohlensäureester der folgenden Formel

$C_8H_{17}O(C_2H_4O)_4COOCH_3$
$C_8H_{17}O(C_2H_4O)_8COOCH_3$
$C_{12}H_{25}O(C_2H_4O)_2COOCH_3$
$C_{14}H_{29}O(C_2H_4O)_6COOC_2H_5$
$C_{16}H_{33}O(C_2H_4O)_7COOC_2H_5$
$C_{18}H_{37}O(C_2H_4O)_2COOCH_3$

und/oder technische Gemische hiervon.

Um derartige unsymmetrische Kohlensäureester zu erhalten, werden mindestens 1 Mol, vorzugsweise 4 Mol bis 10 Mol Dimethylcarbonat auf 1 Mol Anlagerungsprodukte von Ethylenoxid an die genannten Alkohole eingesetzt. Ansonsten kann die Umesterung analog zu der bei den symmetrischen Kohlensäureestern beschriebenen Art erfolgen. Aber auch bei dieser Umesterung können sowohl noch unumgesetzte Anlagerungsprodukte von Ethylenoxid an den beschriebenen Alkoholen verbleiben als auch teilweise symmetrische Kohlensäureester anfallen. Auch derartige Mischungen sollen durch die allgemeine Formel I

für unsymmetrische Kohlensäureester erfaßt werden.
Selbstverständlich können im Sinne der Erfindung auch Mischungen der oben beschriebenen symmetrischen und unsymmetrischen Kohlensäureester verwendet werden.

Im Sinne der Erfindung werden Kohlensäureester bevorzugt, die bei Temperaturen unter 25 °C, vorzugsweise unter 10 °C als Flüssigkeit vorliegen, da sich Flüssigkeiten zur Dosierung und für eine optimale Durchmischung mit dem zu entschäumenden Gut sowie für eine gute Benetzung bereits aufgetretener Schaumblasen besser eignen. Selbstverständlich können auch Lösungen von festen Kohlensäureester nach der allgemeinen Formel I in flüssigen Kohlensäureester der allgemeinen Formel I und/oder in einem Lösungsmittel eingesetzt werden, haben aber den Nachteil, daß ein zusätzlicher Arbeitsschritt notwendig ist, um die Lösungen herzustellen.

Als Schaumbekämpfungsmittel können auch Mischungen von Kohlensäureestern der allgemeinen Formel I mit handelsüblichen Entschäumern und/oder Schauminhibitoren wie Fettsäuremonoglyceride, Fettsäurepolyglykolester und/oder Polyalkylenglykole verwendet werden, die bei Temperaturen unter 25° als Flüssigkeit vorliegen.

Die erfindungsgemäß verwendeten Kohlensäureester können je nach Bedarf in weiten Mengenverhältnissen eingesetzt werden. Sie zeigen bereits bei Zugabe geringster Mengen, vorzugsweise in Mengen unter 1 Gew.-% und insbesondere in Mengen von 0,001 bis 0,8 Gew.-% - bezogen auf zu entschäumendes Gut, z.B. Zuckersiruplösung - gute Wirksamkeiten. Eine obere Grenze der Zugabemenge ergibt sich aus technologischer Sicht nicht. Aus ökonomischen Gründen gibt der Anwendungstechniker jedoch so wenig wie möglich an Schaumbekämpfungsmittel dem zu entschäumenden Gut zu.

Die erfindungsgemäß verwendeten Kohlensäureester wirken sowohl als Schauminhibitoren als auch als Entschäumer und können dementsprechend vor oder nach dem Auftreten von Schaum zugegeben werden. Sie zeigen sehr gute Spontan- und Langzeitwirkung über den gesamten pH-Bereich. Zudem können sie je nach Prozeßbedingungen ohne Probleme von dem zu entschäumenden Gut wieder abgetrennt werden, so daß sie auf Grund ihrer Geruchs-, Geschmacklosigkeit und ihrer physiologischen Unbedenklichkeit in der Nahrungsmittelindustrie als Hilfsstoff verwendet werden können. Ganz besonders gute Ergebnisse werden erzielt, wenn man die Kohlensäureester der allgemeinen Formel I als Schaumbekämpfungsmittel bei der Verarbeitung von Zuckerrüben, so z. B. bei dem Rübentransport, bei der Lagerung der Zuckerrüben, dem Zerkleinern der Zuckerrüben und beim Extrahieren oder bei der Herstellung von Kartoffelprodukten und/oder bei Fermentationsprozessen, insbesondere bei der Herstellung von Backhefe unter Verwendung von Melasse, verwendet werden.

Von besonderer Bedeutung ist die biologische Abbaubarkeit der erfindungsgemäßen Kohlensäureester.

## Beispiele

### A) Herstellung der Kohlensäureester

### Beispiel 1

4 Mol Dimethylcarbonat und 0,5 Mol% Natriummethanolat in Form einer 30%igen methanolischen Lösung wurden unter Stickstoff auf 80 °C erhitzt und dazu 1 Mol eines handelsüblichen Anlagerungsprodukts von 2 Mol Ethylenoxid an 1 Mol eines technischen $C_{12}$ -$C_{14}$-Fettalkoholgemisches (Kettenverteilung 0 bis 2 % $C_{10}$; 70 bis 75 % $C_{12}$; 24 bis 30 % $C_{14}$; 0 bis 2 % $C_{16}$) getropft. Die Reaktionsmischung wurde schrittweise (15 °C/h) auf 140 °C erhitzt und weitere 4 Stunden bei maximal 140 °C gehalten. Freigesetztes Methanol und überschüssiges Dimethylcarbonat wurden abdestilliert. Anschließend wurde die Reaktionsmischung 1 Stunde bei 90 °C mit 1 Gew.-% Schichtsilikat (Tonsil$^R$) gerührt und abgenutscht. Man erhielt einen unsymmetrischen Kohlensäureester mit einer Rest-OHZ von 3,1.

### Beispiel 2

1,5 Mol Dimethylcarbonat, 0,5 Mol% Natriummethanolat in Form einer 30%igen methanolischen Lösung sowie 2 Mol eines handelsüblichen Anlagerungsproduktes von 2 Mol Ethylenoxid an 1 Mol eines technischen $C_{12}$ - $C_{14}$-Fettalkoholgemisches (Kettenverteilung siehe Beispiel 1) wurden unter Stickstoff langsam auf maximal 140 °C (15 °C/h) erhitzt und 1 Stunde bei dieser Temperatur belassen. Freigesetztes Methanol und überschüssiges Dimethylcarbonat wurden abdestilliert. Die Aufarbeitung der Reaktionsmischung erfolgte analog Beispiel 1. Man erhielt einen symmetrischen Kohlensäureester mit einer Rest-OHZ von 29,4.

**Beispiel 3**

Analog Beispiel 2 wurden Dimethylcarbonat, Natriummethanolat in Form einer 30%igen methanolischen Lösung sowie handelsübliches Anlagerungsprodukt von 6 Mol Ethylenoxid an 1 Mol eines technischen $C_{12}$ - $C_{14}$-Fettalkoholgemisches (Kettenverteilung siehe oben) umgesetzt und aufgearbeitet. Man erhielt einen symmetrischen Kohlensäureester mit einer Rest-OHZ von 15.

**Beispiel 4**

0,9 Mol Diethylcarbonat und 0,5 Mol% Natriummethanolat in Form einer 30%igen methanolischen Lösung sowie 1 Mol eines handelsüblichen Anlagerungsproduktes von 2 Mol Ethylenoxid an 1 Mol eines technischen $C_{12}$ - $C_{18}$-Fettalkoholgemisches (Kettenverteilung 0 bis 3 % $C_{10}$; 48 bis 58 % $C_{12}$; 19 bis 24 % $C_{14}$; 9 bis 12 % $C_{16}$; 11 bis 14 % $C_{18}$; 0 bis 0,5 % $C_{20}$) wurden analog Beispiel 2 umgesetzt. Man erhielt einen symmetrischen Kohlensäureester mit einer Rest-OHZ von 37.

**Beispiel 5**

Analog Beispiel 2 wurden Dimethylcarbonat, Natriummethanolat in Form einer 30%igen methanolischen Lösung sowie handelsübliches Anlagerungsprodukt von 7 Mol Ethylenoxid an 1 Mol eines technischen $C_{12}$ - $C_{18}$-Fettalkoholgemisches (Kettenverteilung siehe Beispiel 4) umgesetzt und aufgearbeitet. Man erhielt einen symmetrischen Kohlensäureester mit einer Rest-OHZ von 14.

**Beispiel 6**

4 Mol Diethylcarbonat, 0,5 Mol% Natriummethanolat in Form einer 30%igen methanolischen Lösung sowie 1 Mol eines handelsüblichen Anlagerungsproduktes von 8 Mol Ethylenoxid an 1 Mol technisches Octanol (Kettenverteilung 0 bis 2 % $C_6$; 94 bis 98 % $C_8$; 0 bis 5 % $C_{10}$) wurden analog Beispiel 1 umgesetzt und aufgearbeitet. Man erhielt einen unsymmetrischen Kohlensäureester mit einer Rest-OHZ von 3.

**Beispiel 7**

Die Umsetzung und Aufarbeitung erfolgte analog Beispiel 6, jedoch wurde ein handelsübliches Anlagerungsprodukt von 4 Mol Ethylenoxid an 1 Mol eines technischen Octanols eingesetzt. Man erhielt einen unsymmetrischen Kohlensäureester mit einer Rest-OHZ von 5,5.

**Beispiel 8**

1,5 Mol Diethylcarbonat, 0,5 Mol% Natriummethanolat in Form einer 30%igen methanolischen Lösung sowie 2 Mol eines handelsüblichen Anlagerungsproduktes von 4 Mol Ethylenoxid an technisches Octanol wurden analog Beispiel 2 umgesetzt und aufgearbeitet. Man erhielt einen symmetrischen Kohlensäureester mit einer Rest-OHZ von 12.

**B) Anwendungstests**

In einem 2l Meßzylinder wurden 110 g Zuckersirup (Rübenkraut) und 420 ml Wasser eingefüllt. Mit Hilfe einer Laborschlauchpumpe mit einer Förderleistung von 3 l/min. wurde die Lösung mit einem Glasrohr vom Boden des Meßzylinders angesaugt. Die Rückführung der Flüssigkeit erfolgt über ein zweites Rohr, dessen unteres Ende in der Höhe der Oberkante des Meßzylinders lag. Sobald Schaum und Flüssigkeit zusammen das Volumen von 2000 ml erreichten, wurden 0,05ml der verschiedensten Schaumbekämpfungsmittel mit einer Mikropipette zugesetzt und nach 0,5; 1; 2; 3; 5; 10; 20 und 30 Minuten das Gesamtvolumen von Schaumhöhe und Flüssigkeit abgelesen. Auf diese Weise wurden bei verschiedenen pH-Werten, die durch Zugabe von Calciumhydroxid eingestellt wurden und bei verschiedenen Temperaturen die Kohlensäureester der Beispiele 1 bis 8 überprüft. Tabelle I gibt das Gesamtvolumen von Flüssigkeit und Schaumhöhe in Abhängigkeit der Zeit, des pH-Wertes, Temperatur sowie dem jeweils zugesetzten Schaumbekämpfungsmittel an.

**C) Biologische Abbaubarkeit**

Es wurde die biologische Abbaubarkeit des Esters nach Beispiel 4 untersucht, und zwar der Totalabbau nach dem GF-Test und dem BODIS-Test. Die Löslichkeit des Esters wurde durch Zusatz des Alkylphenolpolyalkylenglykolethers Nonylphenol-10EO-5PO verbessert. Es wurde mit Ultraschall dispergiert.

Der erfindungsgemäße Ester erreichte beim GF-Test BSB/COD-Ergebnisse von > 60 % und beim BODIS-Test Werte von > 80 % $BSB_{28}$/COD. Der Ester ist somit als "readily biodegradable" einzustufen.

Tabelle I

| Schaumbekämpfungsmittel gemäß Beispiel | Blindwert | Zeit in Minuten nach der Entschäumerzugabe: 0,5 | 1 | 2 | 3 | 5 | 10 | 20 | 30 | pH | Temperatur |
|---|---|---|---|---|---|---|---|---|---|---|---|
| 1 | 2000 | 980 | 700 | 660 | 660 | 620 | 600 | 580 | 600 | 5,5 | 23°C |
| 2 | 2000 | 1400 | 820 | 700 | 660 | 660 | 660 | 700 | 740 | 5,5 | 23°C |
| 3 | 2000 | 640 | 540 | 500 | 460 | 460 | 500 | 560 | 600 | 5,5 | 23°C |
| 4 | 2000 | 700 | 660 | 640 | 620 | 580 | 580 | 620 | 640 | 5,5 | 23°C |
| 5 | 2000 | 900 | 540 | 500 | 460 | 460 | 480 | 560 | 600 | 5,5 | 23°C |
| 6 | 2000 | 520 | 560 | 580 | 620 | 640 | 680 | 740 | 780 | 5,5 | 23°C |
| 7 | 2000 | 520 | 500 | 520 | 560 | 600 | 640 | 680 | 720 | 5,5 | 23°C |
| 8 | 2000 | 520 | 520 | 520 | 520 | 520 | 520 | 540 | 580 | 5,5 | 23°C |
| 8 | 2000 | 520 | 540 | 560 | 560 | 560 | 560 | 580 | 600 | 5,5 | 40°C |
| 8 | 2000 | 460 | 440 | 440 | 440 | 440 | 460 | 500 | 500 | 11 | 10°C |

## Patentansprüche

**1.** Verwendung von Kohlensäureestern der allgemeinen Formel I

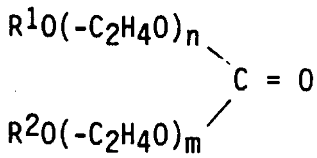

(I)

in der

- $R^1$ ein Alkylrest, abgeleitet von einem aliphatischen, gesättigten primären Alkohol mit 1 bis 22 Kohlenstoffatomen und
- $R^2$ ein Alkylrest, abgeleitet von einem aliphatischen, gesättigten primären Alkohol mit 1 bis 8 Kohlenstoffatomen und/oder $R^1$ und
- n eine Zahl von 2 bis 20 und
- m 0 oder n bedeuten

als Schaumbekämpfungsmittel für die Zuckerrüben- oder kartoffelverarbeitende Nahrungsmittelindustrie und/oder bei Fermentationsprozessen.

**2.** Ausführungsform nach Anspruch 1, dadurch gekennzeichnet, daß Kohlensäureester der allgemeinen Formel I verwendet werden, die bei Temperaturen unter 25 °C, vorzugsweise unter 10 °C flüssig sind.

**3.** Ausführungsform nach Anspruch 1, dadurch gekennzeichnet, daß Kohlensäureester der allgemeinen Formel I verwendet werden, in der

- $R^2$ und $R^1$ jeweils den gleichen Alkylrest, abgeleitet von einem aliphatischen, gesättigten, primären Alkohol mit 6 bis 20 C-Atomen, insbesondere von einem unverzweigten Alkohol mit 8 bis 18 C-Atomen und
- n und m jeweils die gleiche Zahl von 2 bis 16 und insbesondere 2 bis 12

bedeuten.

**4.** Ausführungsform nach Ansprüchen 1 oder 2, dadurch gekennzeichnet, daß Kohlensäureester der allgemeinen Formel I verwendet werden, in der

- $R^1$ ein Alkylrest, abgeleitet von einem aliphatischen, gesättigten, primären Alkohol mit 6 bis 20 und insbesondere von einem unverzweigten Alkohol mit 8 bis 18 C-Atomen und
- $R^2$ ein Methyl- oder Ethylrest und
- n eine Zahl von 2 bis 16, vorzugsweise 2 bis 12 und
- m 0

bedeuten.

**5.** Ausführungsform nach Ansprüchen 1, 2, 3 oder 4, dadurch gekennzeichnet, daß Kohlensäureester der allgemeinen Formel I in Mengen unter 1 Gew.-%, vorzugsweise in Mengen von 0,001 bis 0,8 Gew.-% - bezogen auf das zu entschäumende Gut - verwendet werden.

**6.** Ausführungsform nach mindestens einem der Ansprüche 1 bis 5, gekennzeichnet durch die Verwendung bei der Lagerung, Verarbeitung und Zerkleinerung von Zuckerrüben sowie bei der Herstellung von Backhefe unter Verwendung von Melasse.

## Claims

1. The use of carbonic acid esters corresponding to general formula I

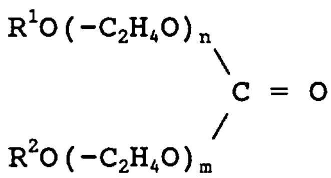

(I)

in which

- $R^1$ is an alkyl radical derived from an aliphatic saturated primary alcohol containing 1 to 22 carbon atoms and
- $R^2$ is an alkyl radical derived from an aliphatic, saturated primary alcohol containing 1 to 8 carbon atoms and/or has the same meaning as $R^1$ and
- n is a number of 2 to 20 and
- m is 0 or has the same meaning as n,

as foam control agents for the sugar beet or potato-processing food industry and/or in fermentation processes.

2. The use claimed in claim 1, characterized in that carbonic acid esters of general formula I which are liquid at temperatures below 25 °C, preferably below 10 °C, are used.

3. The use claimed in claim 1, characterized in that carbonic acid esters corresponding to general formula I in which

- $R^2$ and $R^1$ represent the same alkyl radical derived from an aliphatic, saturated primary $C_{6-20}$ alcohol, more particularly an unbranched $C_{8-18}$ alcohol, and
- n and m represent the same number of 2 to 16, more particularly 2 to 12,

are used.

4. The use claimed in claim 1 or 2, characterized in that carbonic acid esters corresponding to general formula I, in which

- $R^1$ is an alkyl radical derived from an aliphatic, saturated primary $C_{6-20}$ alcohol, more particularly from an unbranched $C_{8-18}$ alcohol,
- $R^2$ is a methyl or ethyl radical,
- n is a number of 2 to 16, preferably 2 to 12, and
- m is 0,

are used.

5. The use claimed in claim 1, 2, 3 or 4, characterized in that carbonic acid esters corresponding to general formula I are used in quantities below 1% by weight and preferably in quantities of 0.001 to 0.8% by weight, based on the material to be foamed.

6. The use claimed in at least one of claims 1 to 5 for the storage, processing and size-reduction of sugar beet and in the production of baker's yeast using molasses.

## Revendications

1. Mise en oeuvre d'esters d'acide carbonique de formule générale I

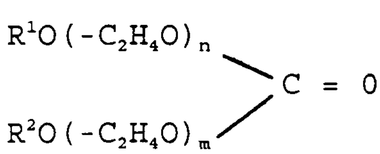

(I)

dans laquelle

- $R^1$ désigne un résidu alkyle, dérivé d'un alcool primaire, saturé, aliphatique, comportant 1 à 22 atomes de carbone, et
- $R^2$ un résidu alkyle, dérivé d'un alcool primaire, saturé, aliphatique, comportant 1 à 8 atomes de carbone, et/ou $R^1$, et
- n un nombre compris entre 2 et 20, et
- m 0 ou n

comme agent antimousse pour l'industrie alimentaire de transformation de la betterave sucrière ou de la pomme de terre et/ou lors de processus de fermentation.

**2.** Variante de réalisation selon la revendication 1, caractérisée en ce qu'elle met en oeuvre des esters d'acide carbonique de formule générale I qui sont liquides à des températures inférieures à 25 °C, de préférence à 10 °C.

**3.** Variante de réalisation selon la revendication 1, caractérisée en ce qu'elle met en oeuvre des esters d'acide carbonique de formule générale I dans laquelle

- $R^2$ et $R^1$ désignent chacun le même résidu alkyle, dérivé d'un alcool primaire, saturé, aliphatique, comportant 6 à 20 atomes C, en particulier d'un alcool linéaire comportant 8 à 18 atomes C, et
- n et m désignent chacun le même nombre compris entre 2 et 16, en particulier entre 2 et 12.

**4.** Variante de réalisation selon les revendications 1 ou 2, caractérisée en ce qu'elle met en oeuvre des esters d'acide carbonique de formule générale I dans laquelle

- $R^1$ désigne un résidu alkyle, dérivé d'un alcool primaire, saturé, aliphatique, comportant 6 à 20 atomes C, en particulier d'un alcool linéaire comportant 8 à 18 atomes C, et
- $R^2$ un résidu méthyle ou éthyle, et
- n un nombre compris entre 2 et 16, de préférence entre 2 et 12, et
- m 0.

**5.** Variante de réalisation selon les revendications 1, 2, 3 ou 4, caractérisée en ce qu'elle met en oeuvre des esters d'acide carbonique de formule générale I dans des quantités inférieures à 1 % en poids, de préférence dans des quantités de 0,001 à 0,8 % en poids - rapportées au produit à démousser.

**6.** Variante de réalisation selon au moins l'une quelconque des revendications 1 à 5, caractérisée par une utilisation lors du stockage, de la transformation et du broyage des betteraves sucrières ainsi que lors de la fabrication de levure de boulanger en mettant en oeuvre de la mélasse.